# EUROPEAN PATENT SPECIFICATION

(11) **EP 3 949 163 B1**
(45) Date of publication and mention of the grant of the patent: **27.08.2025**
(21) Application number: 19722510.5
(22) Date of filing: 04.04.2019
(51) Int. Cl.: H04B 7/185

(54) **TECHNIQUE FOR CLASSIFYING A UE AS AN AERIAL UE**
TECHNIK ZUR KLASSIFIZIERUNG EINES BENUTZER GERÄTES ALS EIN BENUTZER GERÄT IN DER LUFT
TECHNIQUE POUR CLASSIFIER UN UE AÉRIEN

(43) Date of publication of application: 09.02.2022
(73) Proprietor: Telefonaktiebolaget LM Ericsson (publ), 164 83 Stockholm (SE)
(72) Inventor: BERGLUND, Joel, 583 33 Linköping (SE); RYDÉN, Henrik, 116 29 Stockholm (SE)
(74) Representative: Ericsson
(86) International application number: PCT/EP2019/058568
(87) International publication number: WO 2020/200467

(56) References cited:
- EP-A1- 3 462 646
- WO-A1-2019/004925
- NOKIA ET AL: "Air-borne UE identification mechanism", vol. RAN WG2, no. Berlin, Germany; 20170821 - 20170825, 20 August 2017 (2017-08-20), XP051318480, Retrieved from the Internet <URL:http://www.3gpp.org/ftp/Meetings_3GPP_SYNC/RAN2/Docs/> [retrieved on 20170820]

## Description

### Technical Field

The present disclosure generally relates to the field of aerial vehicles. In particular, a technique for classifying a User Equipment (UE) connected to a cellular network as an aerial UE is provided. The technique may be embodied in methods, computer programs, apparatuses and systems.

### Background

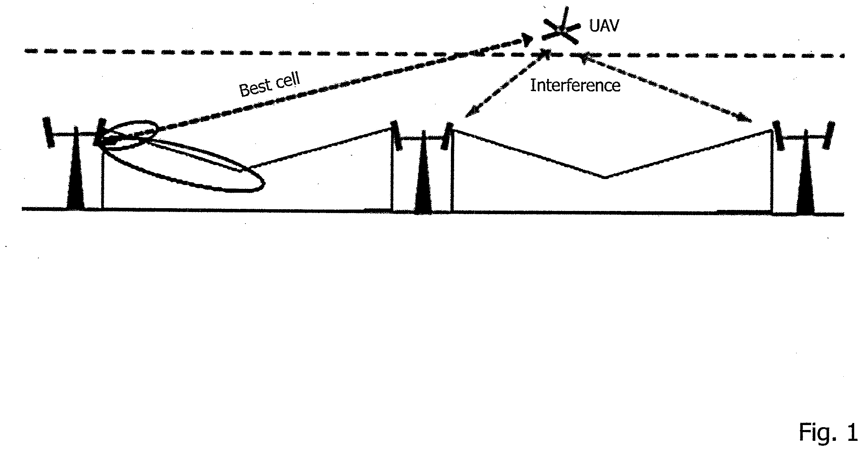

Airborne UEs (in the following also denoted as "aerial" or "flying" UEs) may generally experience radio propagation characteristics that are likely different from radio propagation characteristics experienced by terrestrial UEs (in the following also denoted as "ground" or "ground based" UEs) with respect to radio signals transmitted by base stations of a cellular network. An aerial UE may correspond to an Unmanned Aerial Vehicle (UAV), such as a drone, for example, but it will be understood that any other kind of aerial vehicle comprising a UE, including manned aerial vehicles, may be comprised by the term "aerial UE" as well. As long as an aerial UE flies at a low altitude relative to the base station antenna height, it may experience radio propagation characteristics similar to a conventional ground based UE. Once an aerial UE flies well above the base station antenna height, however, signals from the aerial UE become more visible to multiple cells due to line-of-sight propagation conditions. Such situation is shown in Figure 1. At ground level, line-of-sight conditions may not be given due to obstacles and buildings that become natural blockers of the radio signals. UEs moving at ground level hence generally detect fewer neighbor cells as compared to aerial UEs flying at higher altitudes.

The uplink signal from an aerial UE may increase interference in the neighbor cells and the increased interference may cause a negative impact to ground based UEs, such as smartphones, Internet of Things (IoT) devices, or the like. Similarly, the line-of-sight conditions to multiple cells may lead to higher downlink interference to the aerial UE. As base station antennas are typically tilted downwards to the ground, or at least down below the base station antenna height (as shown in Figure 1), ground based UEs are normally served by the main lobes of the base station antennas, whereas, when an aerial UE flies well above the antenna height, it is likely served by side or back lobes of the base station antennas which have reduced antenna gains compared to the main lobes. Due to the down tilted antennas, a cell that is further away may - contrary to terrestrial UEs - appear as the best cell for an aerial UE, as indicated in Figure 1.

Many aerial UEs, in particular drones, transmit a video feed to their flight controller, which implies a high uplink streaming load for the network. Based on the traffic and control characteristics, mobile operators may categorize the aerial UEs into separate service classes associated with different policies. It may be important in this regard that a mobile operator can identify whether a UE is an aerial UE or a regular ground UE, to thereby be able to provide the right service optimization for aerial UEs while protecting the performance of ground UEs from potential interfering signals from the aerial UEs. For legitimate aerial UEs, standard mechanisms may be enforced to make them recognizable by the network as aerial UEs. As an example, it may be required that a drone operator acquires a Subscriber Identity Module (SIM) card that is specifically designed or registered for drone use. Another method may involve direct indication mechanisms so that aerial UEs automatically inform the network when they are in flying mode, for example.

Such techniques may not be usable with legacy UEs, however, and it may be even more challenging to identify "rogue" aerial UEs that either are not registered with the network or do not support direct indication of the flying mode. For example, there may be cases in which a normal UE is attached to a drone flying over the network. Such terrestrial UE on a flying drone may generate excessive interference to the network and, as such, may not be allowed by regulations in some regions. This phenomenon has been observed in the field and has drawn much attention from mobile operators, and more advanced techniques for flying UE detection have thus been developed. Exemplary unlicensed drone detection techniques involve calculating a Reference Signal Received Power (RSRP) gap between the serving cell and the strongest neighbor cell as well as using a Received Signal Strength Indicator (RSSI) as input. However, these techniques may not be adequate in handover regions, where the RSRP gap is close to zero for both regular ground UEs and unlicensed drones, for example, so that a clear distinction between ground based and aerial UEs is not generally possible. In particular, given the high accuracy requirements for aerial UE detection, solely relying on the above measures may not generally provide satisfactory detection results.

Document WO 2019/004925 A1 discloses a method and one or more network nodes for use in a wireless communication network to determine whether a wireless device is aerial. The one or more network nodes communicate with the wireless device to instruct to report one or more metrics of wireless device parameters. The one or more network nodes receive from the wireless device a report of the metrics and then compare the reported metrics to terrestrial metrics to determine whether the wireless device is aerial.

Document EP 3 462 646 A1 discloses a wireless network comprising a plurality of base stations configured for operating the wireless network, a user equipment configured for communicating with at least one of the plurality of base stations, a categorizer configured for providing a categorizing information categorizing the UE as airworthy UE based on a measurement of a signal characteristic between the UE and the plurality of base stations, and comprising a controller for controlling at least one of the plurality of base stations or the user equipment dependent on the categorizing information.

### Summary

Accordingly, there is a need for technique for aerial UE detection which avoids one or more of the problems discussed above, or other problems.

According to the present disclosure, a method, a computer program product, a network node and a system according to the independent claims are provided. Developments are set forth in the dependent claims.

### Brief Description of the Drawings

Implementations of the technique presented herein are described herein below with reference to the accompanying drawings, in which:
- Fig. 1: illustrates an aerial UE flying above base stations of a cellular network;
- Fig. 2: illustrates an exemplary composition of a network node according to the present disclosure;
- Fig. 3: illustrates a method which may be performed by the network node according to the present disclosure;
- Fig. 4: illustrates an exemplary use case for aerial UE detection in a cellular network comprising base stations with beamforming capabilities according to the present disclosure;
- Fig. 5: illustrates an exemplary use case for aerial UE detection in a cellular network comprising base stations without beamforming capabilities according to the present disclosure; and
- Fig. 6: illustrates an exemplary visualization of collected beam detection patterns received from aerial UEs and non-aerial UEs according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

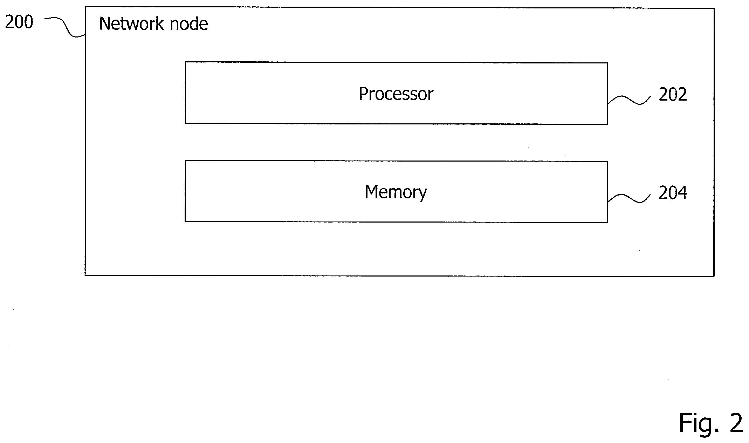

Figure 2 schematically illustrates an exemplary composition of a network node 200 of a cellular network for classifying a UE connected to the cellular network as an aerial UE. The network node 200 comprises at least one processor 202 and at least one memory 204, wherein the at least one memory 204 contains instructions executable by the at least one processor 202 such that the network node 200 is operable to carry out the method steps described herein below with reference to network node.

It will be understood that the network node 200 may be implemented on a physical computing unit or a virtualized computing unit, such as a virtual machine, for example. It will further be appreciated that the network node 200 may not necessarily be implemented on a standalone computing unit, but may be implemented as components - realized in software and/or hardware - residing on multiple distributed computing units as well, such as in a cloud computing environment, for example.

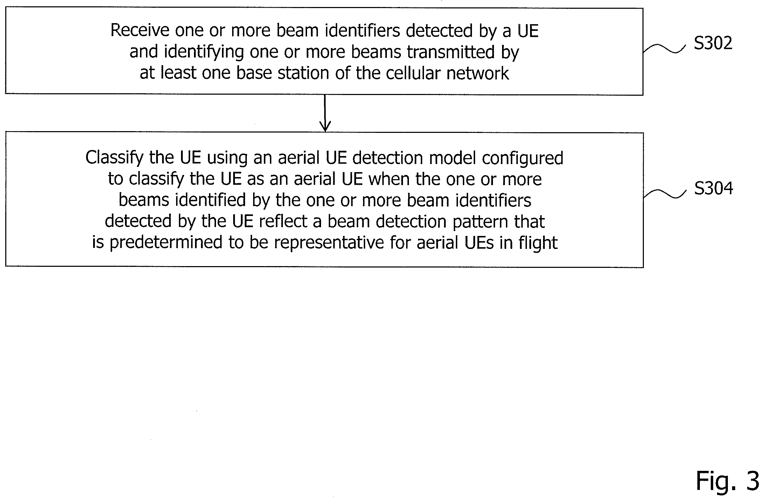

Figure 3 illustrates a method which may be performed by the network node 200 according to the present disclosure. The method is dedicated to classifying a UE connected to a cellular network as an aerial UE. In step S302, the network node 200 may receive one or more beam identifiers detected by the UE and identifying one or more beams transmitted by at least one base station of the cellular network. In step S304, the network node 200 may classify the UE using an aerial UE detection model configured to classify the UE as an aerial UE when the one or more beams identified by the one or more beam identifiers detected by the UE reflect a beam detection pattern that is predetermined to be representative for aerial UEs in flight.

Determining whether a UE is an aerial UE or a non-aerial UE may thus be performed based on the beam identifiers (or "beam IDs") of the one or more beams which are detected (or "received") by the UE or, in other words, which are currently "hearable" by the UE. Each beam identifier may be representative of a beam transmitted by a base station of the cellular network and may uniquely identify the respective beam so that the one or more beams are distinguishable from each other. The one or more beams may include beams originating from different base stations of the cellular network and/or the one or more beams may include multiple different beams originating from the same base station. Different beams (simultaneously) transmitted by a (single) base station may be generated using known beamforming techniques, e.g., using an array of antennas and setting the weights of the antennas to a particular combination to generate a beamformed signal having a radiation pattern in a certain direction, wherein, by adapting the weights, beams can be shaped in both the horizontal and the vertical direction.

An aerial UE may correspond to an airborne (or "flying") UE that is flown above the ground (e.g., at an altitude higher than the antennas of the at least one base station), such as an aerial vehicle during flight or a regular UE attached to (or "traveling with") an aerial vehicle. The aerial vehicle may be a UAV, such as a drone, but may also be any kind of manned aerial vehicle, for example. A non-aerial UE may correspond to a UE which is not flown, such as a regular terrestrial (or "ground based") UE, for example. The cellular network may be any kind of cellular network which supports connectivity to aerial UEs, such as a 4G (e.g., Long Term Evolution (LTE)) network or a 5G (e.g., New Radio (NR)) network, for example. The network node may be one of the at least one base station, for example, but it will be understood that the network node may be any other node of a cellular network as well, such as a node of a core network of the cellular network (e.g., a Mobility Management Entity (MME) in case of a 4G network or an Access and Mobility Management Function (AMF) in case of a 5G network), for example.

Classification of a UE as an aerial UE or a non-aerial UE is carried out using an aerial UE detection model which uses the beam detection pattern perceived by the UE to decide whether the UE is an aerial or a non-aerial UE, wherein the beam detection pattern is represented by the one or more beam identifiers detected by the UE. The aerial UE detection model thus is used to assess whether the beam detection pattern perceived by the UE corresponds to (or "is similar to") a beam detection pattern that is predetermined to be representative for aerial UEs in flight. If the beam detection pattern perceived by the UE is found to comply with (or "to correspond to") a beam detection pattern which is predetermined to be representative for aerial UEs in flight, the UE is classified as an aerial UE_{.} If the beam detection pattern of the UE is not found to comply with a beam detection pattern which is predetermined to be representative for aerial UEs in flight, on the other hand, the UE may be classified as a non-aerial UE.

The predetermined beam detection pattern which is representative for aerial UEs in flight may be a beam detection pattern that is undetectable by non-aerial UEs, or at least unlikely to be detectable by non-aerial UEs. The predetermined beam detection pattern may in other words correspond to a beam detection pattern that is only, or at least more likely, hearable (or "visible") by aerial UEs, rather than non-aerial UEs. In order to enable the aerial UE detection model to assess whether a beam detection pattern perceived by a UE corresponds to a beam detection pattern which is representative for aerial UEs in flight, the aerial UE detection model may be subjected to an initialization (or "generation") process which may include initializing (or "generating" / "preconfiguring") the aerial UE detection model based on beam detection patterns which are representative for aerial UEs in flight. Beam detection patterns which are representative for aerial UEs in flight (and hence useful for aerial UE detection) may thus be identified and the aerial UE detection model may then be initialized based on the identified beam detection patterns. Each identified beam detection pattern may be represented by one or more beam identifiers which are to be detected by a UE to be classified as an aerial UE.

In one such variant, the aerial UE detection model may be generated based on historical data regarding beam identifiers detected by one or more representative aerial UEs during flight. The one or more representative aerial UEs may correspond to legitimate aerial UEs (i.e., UEs which are known to be aerial UEs with certainty), such as flying licensed drones, for example. Aerial UEs may be recognized as legitimate aerial UEs using conventional techniques, such as the ones described above, including the use of a specifically designed or registered SIM card for aerial UE use, or the use of a direct indication by the UE informing the network when it is in flying mode, for example. Due to aerial UEs traveling at higher altitudes as compared to non-aerial UEs in general, the beam identifiers detected by the one or more representative aerial UEs during flight may be representative of far-away beams or beams which are directed upwards (e.g., beams directed towards the sky), for example. As these beam identifiers may be different from beam identifiers representative of beams typically detected by non-aerial (ground based) UEs, the resulting beam detection patterns may generally be employed to distinguish aerial UEs from non-aerial UEs.

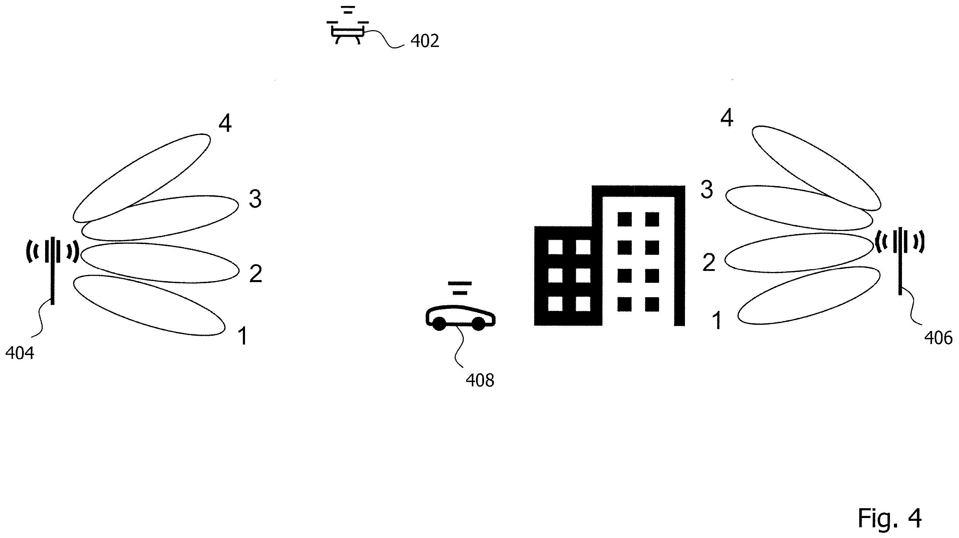

An illustrative example is shown in Figure 4, which shows an aerial UE 402 (e.g., a drone) that is connected to a cellular network comprising two base stations 404 and 406, each of which supports vertical beamforming capabilities. In the shown example, each base station 404, 406 transmits four beams identified by beam identifiers 1 to 4. Due to its altitude, the aerial UE 402 may "hear" beams 3 and 4 of both base stations 404, 406 because only these beams are directed upwards. Beams 1 and 2 of both base stations 404, 406 are directed downwards, on the other hand, and may thus be "hearable" by non-aerial UEs only. In the shown example, a non-aerial UE 408 (e.g., a car or a regular UE in a car) is provided which "hears" beams 1 and 2 from the base station 404 only, because beams 1 and 2 of the base station 406 are blocked by a building located between the base station 406 and the non-aerial UE 408. In the shown example, it is apparent that the beam detection patterns perceived by the aerial UE 402 and the non-aerial UE 408 are clearly different. While the aerial UE 402 perceives a beam detection pattern represented by beams 3 and 4 of the base station 404 as well as beams 3 and 4 of the base station 406, the non-aerial UE 408 perceives a beam detection pattern represented by beams 1 and 2 of the base station 404 only. According to the technique presented herein, such difference in the perceived beam detection patterns may generally be made use of in order to classify UEs as aerial UEs or non-aerial UEs, based on a correspondingly generated aerial UE detection model.

For the purpose of generating the aerial UE detection model, the historical data regarding the detected beam identifiers may be collected by the representative aerial UEs during flight, as described above, and may be reported to the network node, so that the aerial UE detection model may be generated (or "initialized" / "preconfigured") based on the beam detection patterns derived from the historical data. Each beam detection pattern derived from the historical data may in fact not only include the beam identifiers detected by the one or more representative aerial UEs during flight (representative of the beams which an aerial UE typically "hears"), but also transitions between such beams. The beam detection pattern detected by the UE to be classified may include the same type of information for verification against the aerial UE detection model and, as such, the beam detection pattern detected by the UE may include at least one of beam identifiers detected by the one or more representative aerial UEs during flight, and transitions between beam identifiers detected by the one or more representative aerial UEs during flight.

While it will be understood that the aerial UE detection model may be any kind of mathematical or statistical model, in one particular implementation, the aerial UE detection model may be a machine learning based model (e.g., neural network, support vector machine, etc.) which is trained based on the historical data. Such model may provide particularly suitable classification results as machine learning based models may generally be used to find a predictive function for a given dataset mapping a given input to an output. The mapping function may be generated in a training phase which assumes knowledge of both the input and output (also known as "supervised learning"). Such training phase may be carried out based on the beam detection patterns derived from the historical data, wherein the resulting model may be used to classify actual beam detection patterns detected by UEs to be classified, as described above.

In another variant, the aerial UE detection model may be generated based on environmental information (e.g., rather than historical data collected by representative aerial UEs during flight). In particular, the aerial UE detection model may be generated based on environmental information which defines the beam detection pattern as a pattern of beams which is unlikely (e.g., having less than 50%, 20% or 10% likelihood) to be simultaneously detected by non-aerial UEs (or which cannot be simultaneously detected by non-aerial UEs at all). In one such implementation, the beam detection pattern may include beams transmitted by at least two base stations of the cellular network whose distance is too far from each other for a non-aerial UE to simultaneously detect the beams transmitted by the at least two base stations. Based on environmental information, such as a particular distance between two base stations (optionally, also considering field characteristics therebetween, such as obstacles preventing line-of-sight radio propagation conditions between the base stations), it may be estimated that only an aerial UE may "hear" radio signals from both base stations simultaneously, for example. With reference to the example of Figure 4, it may be assumed, for example, that the base station 404 and the base station 406 are separated by a particular distance, for which it is estimated that only an aerial UE (as compared to a non-aerial UE) can "hear" (or is likely to be able to "hear") both base stations 404, 406 due to line-of-sight propagation characteristics. Generating the aerial UE detection model based on environmental information in such manner may avoid the need of collecting historical data for generating the model, thereby enabling to save time as well as resources required for the setup process.

As said, the one or more beam identifiers may be representative of beams transmitted by at least one base station of the cellular network and may uniquely identify the each beam so that the one or more beams are clearly distinguishable from each other. In one implementation, the one or more beam identifiers may correspond to identifiers of (e.g., obtained from) reference signals transmitted by the at least one base station to the UE to be classified. The reference signals may in particular correspond to beamformed reference signals transmitted by the at least one base station to the UE. A reference signal may be beamformed using narrow beams (e.g., using CSI-RS transmission) or using wide beams (e.g., using SSB transmission), for example.

As known to the person skilled in the art, a base station may generally use reference signals to obtain measurements performed by the UE on the beams transmitted by a base station, e.g., to assess the quality of the beams. In general, the reference signals transmitted by the at least one base station to the UE may comprise at least one of a CSI-RS, an SSB, a PSS, an SSS, and a CRS. More specifically, a UE may assess beam qualities via measurements on the SSB (e.g., corresponding to a Synchronization Signal/Physical Broadcast Channel (PBCH) block) in a 5G (e.g., NR) network, or via measurements on the CSI-RS resources in a 5G (e.g., NR) network or a 4G (e.g., LTE) network. A beam identifier may in this case correspond to an identifier of the respective (e.g., beamformed) reference signal. In another variant, a beam identifier may correspond to a Physical Cell Identity (PCI) which, in case of a 5G (e.g., NR) network, may be determined from an SSB or, in case of a 4G (e.g., LTE) network, may be determined from the PSS/SSS and/or the CRS, for example.

In order to obtain the beam identifiers from the UE based on the reference signals, the network node may request the UE to perform measurements on the reference signals. Due to measurements being performed, the one or more beam identifiers may be received with corresponding signal strength indications (e.g., RSRPs) measured by the UE. Classifying the UE using the aerial UE detection model may in this case not only the performed using the beam identifiers, as described above, but may also use the signal strength indications. For the purpose of efficient reporting, the UE may report a list of "hearable" beam identifiers only, i.e., without associated signal strength indications, which may result in less bits to be transferred. In one implementation, a signal strength threshold value (e.g., defining what signal strength may at least be required for a beam to be considered "hearable") may be taken into account and signal strength indications and/or beam identifiers may only be reported if the threshold value exceeded. In one variant, not only one set of beam identifiers may be received by the network node, but a whole time series. As such, a time series of one or more beam identifiers (and, optionally, the associated signal strength indications) detected by the UE may be received, wherein classifying the UE using the aerial UE detection model may be performed on the time series of the one or more beam identifiers (and, optionally, the associated signal strength indications).

With reference to Figure 4 and the exemplary beams 1 to 4 transmitted by each base station 404, 406, it may be assumed that each of the base stations 404, 406 uses four different CSI-RSs as beamformed reference signals, one for each of the beams. The beam identifiers for the beamformed CSI-RSs detected by a UE may then be represented by a list [1₁, 1₂, 1₃, 1₄, 2₁, 2₂, 2₃, 2₄], for example, wherein each entry x_{y} may correspond to a beam identifier indicating beam y of base station x. As said, in the example of Figure 4, the aerial UE 402 perceives a beam detection pattern represented by beams 3 and 4 of the base station 404 as well as beams 3 and 4 of the base station 406 and the non-aerial UE 408 perceives a beam detection pattern represented by beams 1 and 2 of the base station 404 only. These beam detection patterns may be represented by [1₃, 1₄, 2₃, 2₄] in case of the aerial UE 402 and by [1₁, 1₂] in case of the non-aerial UE 408, and such lists may then be reported from the UE to the network node for classification purposes based on the aerial UE detection model, as described above. In another variant, the beam identifiers may be represented by a vector comprising binary coded beam identifiers, where 1 may represent a beam identifier for a "hearable" beam. In the example of Figure 4, such vector could have the form [0, 0, 1, 1, 0, 0, 1, 1] in case of the aerial UE 402 and [1, 1, 0, 0, 0, 0, 0, 0] in case of the non-aerial UE 408, for example.

As said, beam detection patterns which are representative of aerial UEs in flight (and thus useful for aerial UE detection) may be identified and the aerial UE detection model may then be initialized based on the identified beam detection patterns. Based on the beams which have been identified to be useful for aerial UE detection, the at least one base station of the cellular network may explicitly be requested to transmit the one or more beams for aerial UE detection, e.g., when the at least one base station not always transmits (all of) the identified beams (e.g., CSI-RS). The network node may thus request the at least one base station of the cellular network to transmit the one or more beams. The at least one base station may generally be representative of a serving cell of the UE and one or more neighboring cells. As such, to increase detection accuracy, not only the serving cell, but also neighboring cells may be requested to transmit relevant beams for aerial UE detection. The at least one base station of the cellular network may thus comprise a plurality of neighboring base stations of the cellular network, for example.

In the example of Figure 4, the beams which may be identified as being useful for aerial UE detection may comprise both beams 4 of the base stations 404, 406, for example, since these beams may be particularly relevant for detecting the UE 402 as an aerial UE. Although such upward beams may not always be transmitted by the base stations, they may (e.g., at least temporarily) be activated to improve aerial UE detection accuracy. The one or more beams transmitted by the at least one base station of the cellular network may as such comprise at least one beam whose main lobe is directed upwards (e.g., directed towards the sky) and the at least one beam whose main lobe is directed upwards may be used as a prioritized beam for aerial UE detection in the area UE detection model, for example.

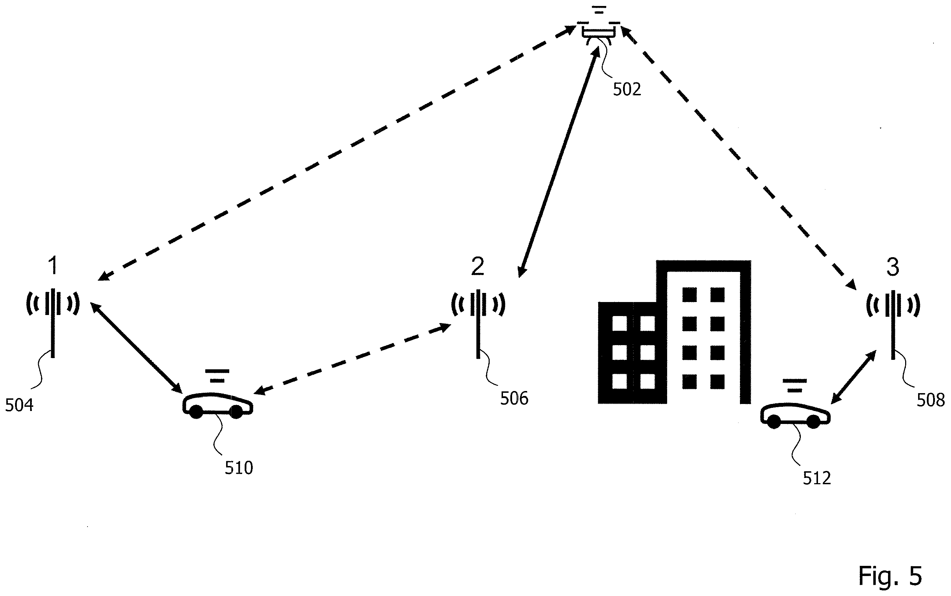

Figure 5 illustrates another example in which an aerial UE 502 (e.g., a drone) is connected to a cellular network comprising three base stations 504, 506 and 508. As compared to the example of Figure 4, the base stations 504, 506 and 508 are not configured with beamforming capabilities and, therefore, the beam identifiers may in this example correspond to the PCIs of the corresponding cells, wherein base station 504 is associated with PCI 1, base station 506 is associated with PCI 2, and base station 508 is associated with PCI 3, as indicated in the figure. In addition to the aerial UE 502, two non-aerial UEs 510 and 512 (e.g., cars or UEs traveling inside of cars) are shown. In the figure, straight line arrows indicate the serving cell of the respective UE and the dashed arrows indicate the neighboring cells within coverage. In the shown example, the aerial UE 502 may "hear" beams 1, 2 and 3, whereas the non-aerial UE 510 may only "hear" beams 1 and 2 and the non-aerial UE 512 may only "hear" beam 3 due the to buildings being located between the base station 506 and the base station 508. Since, in this example, only an aerial UE may simultaneously detect all beams 1, 2 and 3, such beam detection pattern may be used to uniquely classify a UE 502 as an airborne UE.

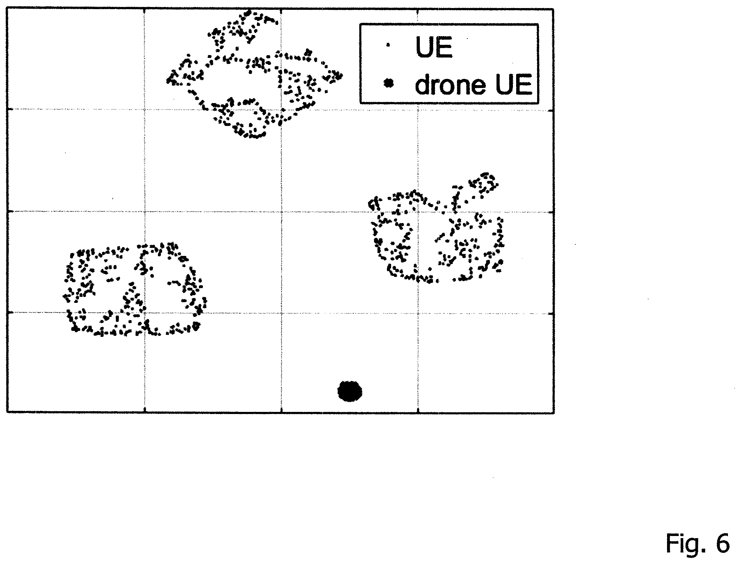

Figure 6 illustrates an exemplary visualization of collected beam detection patterns received from a plurality of aerial UEs and non-aerial UEs in a scenario like the one shown in Figure 5, where beams 1, 2 and 3 may be received from three base stations. As can be seen in Figure 6, a clear distinction between non-aerial UEs (denoted "UE" in the figure) and aerial UEs (denoted "drone UE" in the figure) becomes visible. More specifically, using the notation [RSRP_cell1, RSRP_cell2, RSRP_cell3], four clusters are shown which correspond to the beam detection patterns [>0, >0, >0], [0, >0, >0], [>0, 0, >0], and [>0, >0, 0]. As only aerial UEs may detect the beams of all of the three base stations, the pattern [>0, >0, >0] corresponds to the beam detection pattern representative of aerial UEs.

As has become apparent from the above, the present disclosure provides a technique for classifying a UE connected to a cellular network as an aerial UE or a non-aerial UE. The technique presented herein may be employed for the detection of rogue aerial UEs (e.g., unlicensed drones) or aerial UEs that do not support direct indication of a flying mode, for example. The proposed technique may involve identifying aerial UEs by requesting measurements on beams that have been identified as useful for aerial UE detection. A corresponding aerial UE detection model may be estimated based on historical data and/or environmental information and may then be employed to classify a UE as aerial or non-aerial. Using the beam detection patterns represented by the beam identifiers, the proposed technique may enable improved detection accuracy since aerial UEs at higher altitude may likely detect more (combinations of) neighboring cells, resulting in beam detection patterns which may be naturally different from those of UEs at ground (or street) level. The transmission of vertical beams may increase detection accuracy and may enable flying UE detection using UE measurements from one base station only. The possibility of instructing neighboring cells to transmit relevant beams may increase detection accuracy even further, in particular in combination with beams directed towards the sky. Using the technique presented herein, aerial UE detection may also become more efficient because only beams that have been identified as useful for drone detection may need to be measured at the UE and may need to be transmitted by the base stations. To further increase efficiency, a UE may only report a list of hearable beam identifiers without including associated signal quality measurements to save bits required for the data transfer.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for classifying a User Equipment, UE, (402, 408; 502, 510, 512) connected to a cellular network as an aerial UE, (402; 502) the method being performed by a network node (200) of the cellular network and comprising:
receiving (S302) one or more beam identifiers detected by the UE (402, 408; 502, 510, 512) and identifying, by the one or more beam identifiers, one or more beams transmitted by at least one base station (404, 406; 504, 506, 508) of the cellular network; and
classifying (S304) the UE (402, 408; 502, 510, 512) using an aerial UE detection model configured to classify the UE (402, 408; 502, 510, 512) as an aerial UE (402; 502) when the one or more beam identifiers, which represent a beam detection pattern, reflect a beam detection pattern that is predetermined to be representative for aerial UEs (402; 502) in flight,
wherein the aerial UE detection model is generated based on historical data **characterized in that** the historical data are regarding beam identifiers detected by one or more representative aerial UEs during flight, and
wherein the beam detection pattern that is predetermined to be representative for aerial UEs includes beam identifiers detected by the one or more representative aerial UEs during flight, and transitions between beam identifiers detected by the one or more representative aerial UEs during flight.

2. The method of claim 1, wherein the aerial UE detection model is a machine learning based model which is trained based on the historical data.

3. The method of claim 1 or 2, wherein the aerial UE detection model is generated based on environmental information defining the beam detection pattern as a pattern of beams which is unlikely to be simultaneously detected by non-aerial UEs (408; 510, 512),
wherein the beam detection pattern includes beams transmitted by at least two base stations (404, 406; 504, 506, 508) of the cellular network whose distance is too far from each other for a non-aerial UE (408; 510, 512) to simultaneously detect the beams transmitted by the at least two base stations (404, 406; 504, 506, 508).

4. The method of any one of claims 1 to 3, wherein the one or more beam identifiers correspond to identifiers of reference signals transmitted by the at least one base station (404, 406; 504, 506, 508) to the UE (402, 408; 502, 510, 512).

5. The method of claim 4, wherein:
- the reference signals correspond to beamformed reference signals transmitted by the at least one base station (404, 406; 504, 506, 508) to the UE (402, 408; 502, 510, 512); and/or
- the reference signals comprise at least one of: a channel state information reference signal, CSI-RS, a synchronization signal block, SSB, a primary synchronization signal, PSS, a secondary synchronization signal, SSS, and a cell specific reference signal, CRS; and/or
- the method further comprises requesting the UE (402, 408; 502, 510, 512) to perform measurements on the reference signals.

6. The method of any one of claims 1 to 5, wherein the one or more beam identifiers are received with corresponding signal strength indications measured by the UE (402, 408; 502, 510, 512) and wherein classifying (S304) the UE (402, 408; 502, 510, 512) using the aerial UE detection model is performed using the signal strength indications.

7. The method of any one of claims 1 to 6, wherein:
- a time series of one or more beam identifiers detected by the UE (402, 408; 502, 510, 512) is received and wherein classifying (S304) the UE (402, 408; 502, 510, 512) using the aerial UE detection model is performed based on the time series of the one or more beam identifiers; and/or
- the method further comprises requesting the at least one base station (404, 406; 504, 506, 508) of the cellular network to transmit the one or more beams; and/or
- the at least one base station (404, 406; 504, 506, 508) of the cellular network comprises a plurality of neighboring base stations (404, 406; 504, 506, 508) of the cellular network.

8. The method of any one of claims 1 to 7, wherein the one or more beams transmitted by the at least one base station (404, 406; 504, 506, 508) of the cellular network comprise at least one beam whose main lobe is directed upwards; and, optionally,
wherein the at least one beam whose main lobe is directed upwards is used as a prioritized beam for aerial UE detection in the aerial UE detection model.

9. A computer program product comprising program code portions for performing the method of any one of claims 1 to 8 when the computer program product is executed on one or more computing devices.

10. The computer program product of claim 9, stored on a computer readable recording medium.

11. A network node (200) of a cellular network for classifying a User Equipment, UE, (402, 408; 502, 510, 512) connected to the cellular network as an aerial UE (402; 502), the network node (200) comprising at least one processor (202) and at least one memory (204), the at least one memory (204) containing instructions executable by the at least one processor (202) such that the network node (200) performs the method of any one of claims 1 to 8 when the processor executes the instructions of the memory.

12. A system comprising a network node (200) according to claim 11.

## Patentansprüche

1. Verfahren zum Klassifizieren einer Benutzerausrüstung, UE, (402, 408; 502, 510, 512), die mit einem Mobilfunknetz verbunden ist, als ein Luft-UE (402; 502), wobei das Verfahren von einem Netzwerkknoten (200) des Mobilfunknetzes ausgeführt wird und Folgendes umfasst:
Empfangen (S302) einer oder mehrerer von der UE (402, 408; 502, 510, 512) erfasster Strahlkennungen und Identifizieren eines oder mehrerer von mindestens einer Basisstation (404, 406; 504, 506, 508) des Mobilfunknetzes übertragenen Strahlen durch die eine oder mehreren Strahlkennungen; und
Klassifizieren (S304) der UE (402, 408; 502, 510, 512) unter Verwendung eines Luft-UE-Erfassungsmodells, das dazu konfiguriert ist, die UE (402, 408; 502, 510, 512) als eine Luft-UE (402; 502) zu klassifizieren, wenn die eine oder mehrere Strahlkennungen,
die ein Strahlerfassungsmuster darstellen, ein Strahlerfassungsmuster widerspiegeln, das dazu vorbestimmt ist, für im Flug befindliche Luft-UEs (402; 502) repräsentativ zu sein,
wobei das Luft-UE-Erfassungsmodell basierend auf historischen Daten erzeugt wird, **dadurch gekennzeichnet, dass** die historischen Daten Strahlkennungen betreffen, die von einem oder mehreren repräsentativen Luft-UEs während des Fluges erfasst werden, und
wobei das Strahlerfassungsmuster, das dazu vorbestimmt ist, für Luft-UEs repräsentativ zu sein, Strahlkennungen, die von dem einen oder den mehreren repräsentativen Luft-UEs während des Flugs erfasst werden, und Übergänge zwischen Strahlkennungen beinhaltet, die von dem einen oder den mehreren repräsentativen Luft-UEs während des Flugs erfasst werden.

2. Verfahren nach Anspruch 1, wobei das Luft-UE-Erfassungsmodell ein auf maschinellem Lernen basierendes Modell ist, das basierend auf den historischen Daten trainiert wird.

3. Verfahren nach Anspruch 1 oder 2, wobei das Luft-UE-Erfassungsmodell basierend auf Umgebungsinformationen erzeugt wird, die das Strahlerfassungsmuster als ein Muster von Strahlen definieren, bei denen es unwahrscheinlich ist, dass sie gleichzeitig von Nicht-Luft-UEs (408; 510, 512) erfasst werden,
wobei das Strahlerfassungsmuster Strahlen beinhaltet, die von mindestens zwei Basisstationen (404, 406; 504, 506, 508) des Mobilfunknetzes übertragen werden, deren Entfernung voneinander zu groß ist, damit ein Nicht-Luft-UE (408; 510, 512) die von den mindestens zwei Basisstationen (404, 406; 504, 506, 508) übertragenen Strahlen gleichzeitig erfasst.

4. Verfahren nach einem der Ansprüche 1 bis 3, wobei die eine oder die mehreren Strahlkennungen Kennungen von Referenzsignalen entsprechen, die von der mindestens einen Basisstation (404, 406; 504, 506, 508) an die UE (402, 408; 502, 510, 512) übertragen werden.

5. Verfahren nach Anspruch 4, wobei:
- die Referenzsignale strahlgeformten Referenzsignalen entsprechen, die von der mindestens einen Basisstation (404, 406; 504, 506, 508) an die UE (402, 408; 502, 510, 512) übertragen werden; und/oder
- die Referenzsignale mindestens eines umfassen von: einem Kanalzustandsinformationsreferenzsignal, CSI-RS, einem Synchronisationssignalblock, SSB, einem primären Synchronisationssignal, PSS, einem sekundären Synchronisationssignal, SSS, und einem zellenspezifischen Referenzsignal, CRS; und/oder
- das Verfahren weiter Auffordern der UE (402, 408; 502, 510, 512) umfasst, Messungen an den Referenzsignalen durchzuführen.

6. Verfahren nach einem der Ansprüche 1 bis 5, wobei die eine oder die mehreren Strahlkennungen mit entsprechenden Signalstärkenangaben empfangen werden, die von der UE (402, 408; 502, 510, 512) gemessen werden, und wobei das Klassifizieren (S304) der UE (402, 408; 502, 510, 512) unter Verwendung des Luft-UE-Erfassungsmodells unter Verwendung der Signalstärkeangaben durchgeführt wird.

7. Verfahren nach einem der Ansprüche 1 bis 6, wobei:
- eine Zeitreihe einer oder mehrerer Strahlkennungen, die von der UE (402, 408; 502, 510, 512) erfasst werden, empfangen wird, und wobei das Klassifizieren (S304) der UE (402, 408; 502, 510, 512) unter Verwendung des Luft-UE-Erfassungsmodells basierend auf der Zeitreihe der einen oder mehreren Strahlkennungen durchgeführt wird; und/oder
- das Verfahren weiter Auffordern der mindestens einen Basisstation (404, 406; 504, 506, 508) des Mobilfunknetzes umfasst, den einen oder mehrere Strahlen zu senden; und/oder
- die mindestens eine Basisstation (404, 406; 504, 506, 508) des Mobilfunknetzes eine Vielzahl von benachbarten Basisstationen (404, 406; 504, 506, 508) des Mobilfunknetzes umfasst.

8. Verfahren nach einem der Ansprüche 1 bis 7, wobei der eine oder die mehreren Strahlen, die von der mindestens einen Basisstation (404, 406; 504, 506, 508) des Mobilfunknetzes übertragen werden, mindestens einen Strahl umfassen, dessen Hauptkeule nach oben gerichtet ist; und
wobei der mindestens eine Strahl, dessen Hauptkeule nach oben gerichtet ist, optional als priorisierter Strahl für die Luft-UE-Erfassung in dem Luft-UE-Erfassungsmodell verwendet wird.

9. Computerprogrammprodukt, das Programmcodeabschnitte zum Durchführen des Verfahrens nach einem der Ansprüche 1 bis 8 umfasst, wobei das Computerprogrammprodukt auf einer oder mehreren Rechenvorrichtungen ausgeführt wird.

10. Computerprogrammprodukt nach Anspruch 9, das auf einem computerlesbaren Aufzeichnungsmedium gespeichert ist.

11. Netzwerkknoten (200) eines Mobilfunknetzes zum Klassifizieren einer Benutzerausrüstung, UE (402, 408; 502, 510, 512), die mit dem Mobilfunknetz als eine Luft-UE (402; 502) verbunden ist, wobei der Netzwerkknoten (200) mindestens einen Prozessor (202) und mindestens einen Speicher (204) umfasst, wobei der mindestens eine Speicher (204) Anweisungen enthält, die von dem mindestens einen Prozessor (202) derart ausführbar sind, dass der Netzwerkknoten (200) das Verfahren nach einem der Ansprüche 1 bis 8 ausführt, wenn der Prozessor die Anweisungen des Speichers ausführt.

12. System, das einen Netzwerkknoten (200) nach Anspruch 11 umfasst.

## Revendications

1. Procédé de classification d'un équipement utilisateur (UE) (402, 408 ; 502, 510, 512) connecté à un réseau cellulaire en tant qu'UE aérien (402 ; 502), le procédé étant exécuté par un nœud de réseau (200) du réseau cellulaire et comprenant :
la réception (S302) d'un ou de plusieurs identifiants de faisceau détectés par l'UE (402, 408 ; 502, 510, 512) et l'identification, par les un ou plusieurs identifiants de faisceau, d'un ou de plusieurs faisceaux transmis par au moins une station de base (404, 406 ; 504, 506, 508) du réseau cellulaire ; et
la classification (S304) de l'UE (402, 408 ; 502, 510, 512) à l'aide d'un modèle de détection d'UE aérien configuré pour classer l'UE (402, 408 ; 502, 510, 512)en tant qu'UE aérien (402 ; 502) lorsque les un ou plusieurs identifiants de faisceau,
qui représentent un motif de détection de faisceau, reflètent un motif de détection de faisceau qui est prédéterminé pour être représentatif d'UE aériens (402 ; 502) en vol,
dans lequel le modèle de détection d'UE aérien est généré sur la base de données historiques, **caractérisé en ce que** les données historiques concernent des identifiants de faisceau détectés par un ou plusieurs UE aériens représentatifs pendant un vol, et
dans lequel le motif de détection de faisceau qui est prédéterminé pour être représentatif d'UE aériens, inclut des identifiants de faisceau détectés par les un ou plusieurs UE aériens représentatifs pendant un vol, et des transitions entre des identifiants de faisceau détectés par les un ou plusieurs UE aériens représentatifs pendant un vol.

2. Procédé selon la revendication 1, dans lequel le modèle de détection d'UE aérien est un modèle basé sur un apprentissage automatique qui est entraîné sur la base des données historiques.

3. Procédé selon la revendication 1 ou 2, dans lequel le modèle de détection d'UE aérien est généré sur la base d'informations environnementales définissant le motif de détection de faisceau comme un motif de faisceaux qui est peu susceptible d'être détecté simultanément par des UE non aériens (408 ; 510, 512),
dans lequel le motif de détection de faisceau inclut des faisceaux transmis par au moins deux stations de base (404, 406 ; 504, 506, 508) du réseau cellulaire dont la distance entre l'une et l'autre est trop grande pour qu'un UE non aérien (408 ; 510, 512) puisse détecter simultanément les faisceaux transmis par les au moins deux stations de base (404, 406 ; 504, 506, 508).

4. Procédé selon l'une quelconque des revendications 1 à 3, dans lequel les un ou plusieurs identifiants de faisceau correspondent à des identifiants de signaux de référence transmis par la au moins une station de base (404, 406 ; 504, 506, 508) à l'UE (402, 408 ; 502, 510, 512).

5. Procédé selon la revendication 4, dans lequel :
- les signaux de référence correspondent à des signaux de référence formés en faisceau transmis par la au moins une station de base (404, 406 ; 504, 506, 508) à l'UE (402, 408 ; 502, 510, 512) ; et/ou
- les signaux de référence comprennent au moins l'un : d'un signal de référence d'informations d'état de canal, CSI-RS, d'un bloc de signal de synchronisation, SSB, d'un signal de synchronisation primaire, PSS, d'un signal de synchronisation secondaire, SSS, et d'un signal de référence spécifique à la cellule, CRS ; et/ou
- le procédé comprend en outre la demande à l'UE (402, 408 ; 502, 510, 512) d'effectuer des mesures sur les signaux de référence.

6. Procédé selon l'une quelconque des revendications 1 à 5, dans lequel les un ou plusieurs identifiants de faisceau sont reçus avec des indications d'intensité de signal correspondantes mesurées par l'UE (402, 408 ; 502, 510, 512) et dans lequel la classification (S304) de l'UE (402, 408 ; 502, 510, 512) à l'aide du modèle de détection d'UE aérien est effectuée à l'aide des indications d'intensité de signal.

7. Procédé selon l'une quelconque des revendications 1 à 6, dans lequel :
- une série temporelle d'un ou de plusieurs identifiants de faisceau détectés par l'UE (402, 408 ; 502, 510, 512) est reçue et dans lequel la classification (S304) de l'UE (402, 408 ; 502, 510, 512) à l'aide du modèle de détection d'UE aérien est effectuée sur la base de la série temporelle des un ou plusieurs identifiants de faisceau ; et/ou
- le procédé comprend en outre la demande à la au moins une station de base (404, 406 ; 504, 506, 508) du réseau cellulaire de transmettre les un ou plusieurs faisceaux ; et/ou
- la au moins une station de base (404, 406 ; 504, 506, 508) du réseau cellulaire comprend une pluralité de stations de base voisines (404, 406 ; 504, 506, 508) du réseau cellulaire.

8. Procédé selon l'une quelconque des revendications 1 à 7, dans lequel les un ou plusieurs faisceaux émis par la au moins une station de base (404, 406 ; 504, 506, 508) du réseau cellulaire comprennent au moins un faisceau dont le lobe principal est dirigé vers le haut ; et, facultativement,
dans lequel le au moins un faisceau dont le lobe principal est dirigé vers le haut, est utilisé comme faisceau priorisé pour une détection d'UE aérien dans le modèle de détection d'UE aérien.

9. Produit de programme informatique comprenant des parties de code de programme pour réaliser le procédé selon l'une quelconque des revendications 1 à 8 lorsque le produit de programme informatique est exécuté sur un ou plusieurs dispositifs informatiques.

10. Produit de programme informatique selon la revendication 9, stocké sur un support d'enregistrement lisible par ordinateur.

11. Nœud de réseau (200) d'un réseau cellulaire pour classer un équipement d'utilisateur, UE, (402, 408 ; 502, 510, 512) connecté au réseau cellulaire en tant qu'UE aérien (402 ; 502), le nœud de réseau (200) comprenant au moins un processeur (202) et au moins une mémoire (204), la au moins une mémoire (204) contenant des instructions exécutables par le au moins un processeur (202) de telle sorte que le nœud de réseau (200) réalise le procédé selon l'une quelconque des revendications 1 à 8 lorsque le processeur exécute les instructions de la mémoire.

12. Système comprenant un nœud de réseau (200) selon la revendication 11.
